# EUROPEAN PATENT APPLICATION

(11) **EP 1 936 544 A1**
(43) Date of publication of application: **25.06.2008**
(21) Application number: 06026536.0
(22) Date of filing: 21.12.2006
(51) Int. Cl.: G06K 19/077

(54) **Radio frequency identification tag device having a metal substrate**

(71) Applicant: CHINA STEEL CORPORATION, Hsiao-Kang Dist. Kao hsiung (TW)
(72) Inventor: Lin, Chang-Tsun, Ling-Ya District Kaohsiung (TW); Chen, Sung-Lin, Ta-Liao Hsiang Kaohsiung (TW); Liao, Lung-Chi, Feng-Shan City Kaohsiung (TW)
(74) Representative: Altenburg, Udo

(57) **Abstract**

A radio frequency identification tag device includes a metal substrate (1) having opposite first and second surfaces (101, 102), and a slot (11) that extends from the first surface (101) to the second surface (102). An inlay tag (2) is attached to the first surface (101) of the metal substrate (1), and is disposed to span at least a part of the slot (11).

## Description

The invention relates to a radio frequency identification tag device, more particularly to a radio frequency identification tag device having a metal substrate.

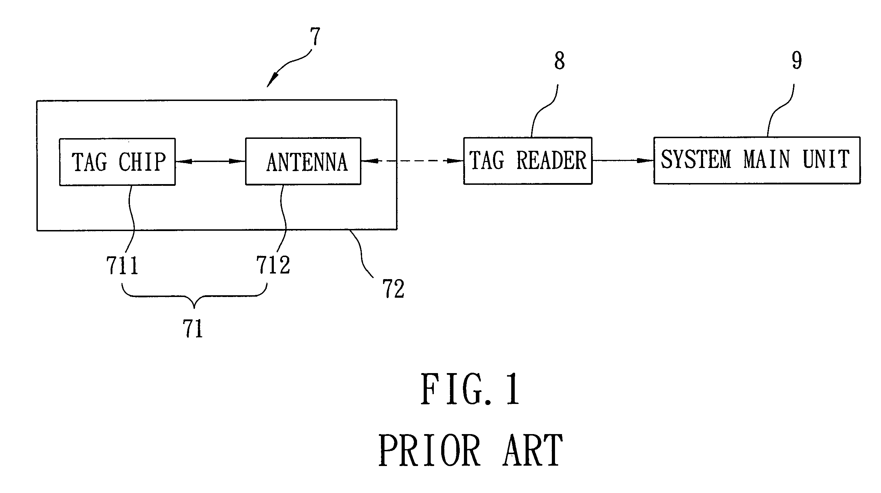

Referring to Figure 1, a radio frequency identification (RFID) system is shown to include a conventional RFID tag device 7 adapted to be installed on a product (not shown), a tag reader 8 communicating with the conventional RFID tag device 7 in a wireless manner, and a system main unit 9 connected electrically to the tag reader 8.

The conventional RFID tag device 7 includes an inlay tag 71 packaged by an insulating packing 72 for protection purposes and adhered or hung to the product. The inlay tag 71 has a tag chip 711, and an antenna 712 connected electrically to the tag chip 711.

In operation, the tag reader 8 outputs and transmits a read request signal to the antenna 712 in a wireless manner. Subsequently, after the tag chip 711 receives the read request signal from the tag reader 8 via the antenna 712, the tag chip 711 outputs a reply signal corresponding to the read request signal and indicating product information, such as weight, class, lot number, components, etc, to the tag reader 8 via the antenna 712 in a wireless manner for processing by the system main unit 9.

The conventional RFID tag device 7 is adapted for use with metallic and non-metallic products. In actual use, the conventional RFID tag device 7 for metal products is expensive, has a relatively large size, and receives the read request signal and transmits the reply signal at a frequency of about 2.45 GHz from and to the tag reader 8. As a result, to ensure reception of the read request signal and proper transmission of the reply signal, the conventional RFID tag device 7 is preferably disposed to be spaced apart from the tag reader 8 by a distance not greater than about one meter and to face the tag reader 8 at a specific side thereof, thereby resulting in inconvenience during use. On the other hand, although the conventional RFID tag device 7 for non-metallic products is cheaper than that for metal products, and has opposite sides suitable for transmission and reception at a frequency of about 2.45 GHz, an effective communicating distance between the conventional RFID tag device 7 and the tag reader 8 is relatively short.

If the conventional RFID tag device 7 for non-metallic products is attached to a metallic product to reduce costs, the read request signal radiated by the tag reader 8 is easily reflected by the metallic product. In addition, since a phase difference between the reflected read request signal and the reply signal is 180°, reception of the reply signal by the tag reader 8 may be affected adversely. As a result, the conventional RFID tag device 7 for non-metallic products cannot be directly attached to a metal product.

Furthermore, when the conventional RFID tag device 7 for non-metallic products is installed to a metallic product, such as a steel product, since the packing 72 is relatively fragile as compared to the steel product, collision among the metallic products may result in damage to the conventional RFID tag device 7 during transport.

Therefore, the object of the present invention is to provide a radio frequency identification tag device that is suitable for metallic and non-metallic products and that can overcome the aforesaid drawbacks of the

### prior art.

According to the present invention, a radio frequency identification tag device comprises:
a metal substrate having opposite first and second surfaces, and a slot that extends from the first surface to the second surface; and
an inlay tag attached to the first surface of the metal substrate and disposed to span at least a part of the slot.

Other features and advantages of the present invention will become apparent in the following detailed description of the preferred embodiments with reference to the accompanying drawings, of which:
Figure 1 is a schematic block diagram illustrating an RFID system having a conventional RFID tag device;
Figure 2 is an exploded perspective view showing the first preferred embodiment of an RFID tag device according to the present invention;
Figure 3 is an exploded perspective view showing the second preferred embodiment of an RFID tag device according to the present invention;
Figure 4 is a schematic view of the second preferred embodiment; and
Figure 5 is a fragmentary schematic sectional view of the second preferred embodiment.

Before the present invention is described in greater detail, it should be noted that like elements are denoted by the same reference numerals throughout the disclosure.

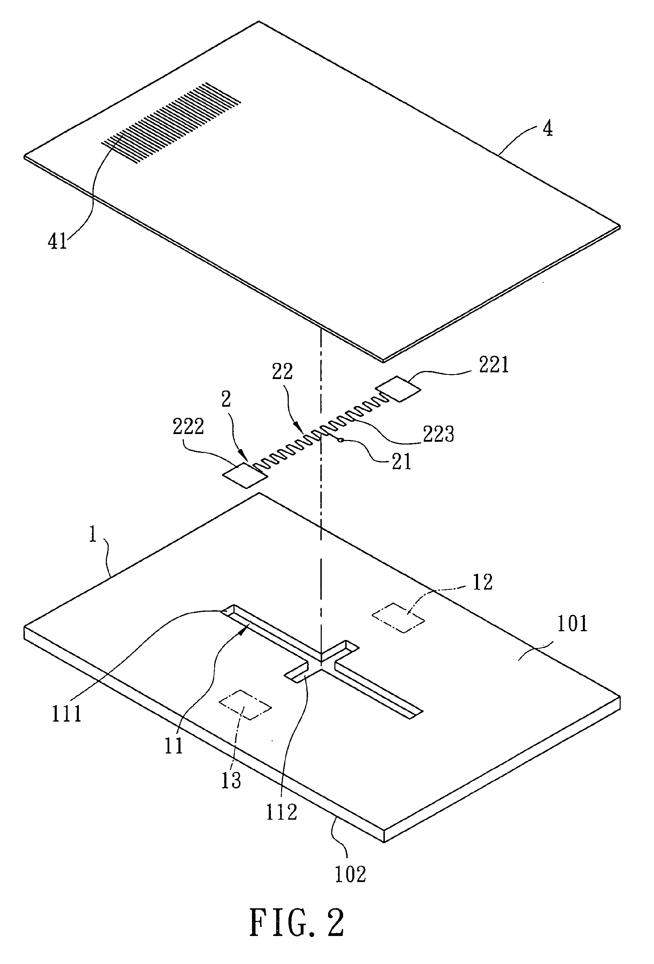

Referring to Figure 2, the first preferred embodiment of an RFID tag device according to the present invention is shown to include a metal substrate 1, an inlay tag 2, and a label sheet 4.

The metal substrate 1 has opposite first and second surfaces 101, 102, and a slot 11 that extends from the first surface 101 to the second surface 102. In this embodiment, the slot 11 has an elongate first slot portion 111, and an elongate second slot portion 112 intersecting perpendicularly the first slot portion 111 and having a length shorter than that of the first slot portion 111. The first surface 101 has opposite first and second mounting areas 12, 13 that are disposed respectively adjacent to opposite ends of the second slot portion 112 of the slot 11.

The inlay tag 2 is attached to the first surface 101 of the metal substrate 1, and is disposed to span at least a part of the slot 11. In this embodiment, the inlay tag 2 is a tag designed for non-metallic products and to operate at an operating frequency of 2.45 GHz, and includes a dipole antenna 22 and a tag chip 21. The antenna 22 has opposite first and second end portions 221, 222 attached respectively to the first and second mounting areas 12, 13 of the first surface 101 of the metal substrate 1, and a meandering intermediate portion 223 interconnecting the first and second end portions 221, 222 and disposed to span the second slot portion 112 of the slot 11 in the metal substrate 1. The tag chip 21 is connected electrically to a center of the intermediate portion 223 of the antenna 22, and has an impedance matching that of an assembly of the dipole antenna 22 and the metal substrate 1.

In this embodiment, the label sheet 4 is made from a non-metallic material, such as paper, and covers the first surface 101 of the metal substrate 1 and the inlay tag 2. The label sheet 4 is formed with visible product information in the form of a bar code 41.

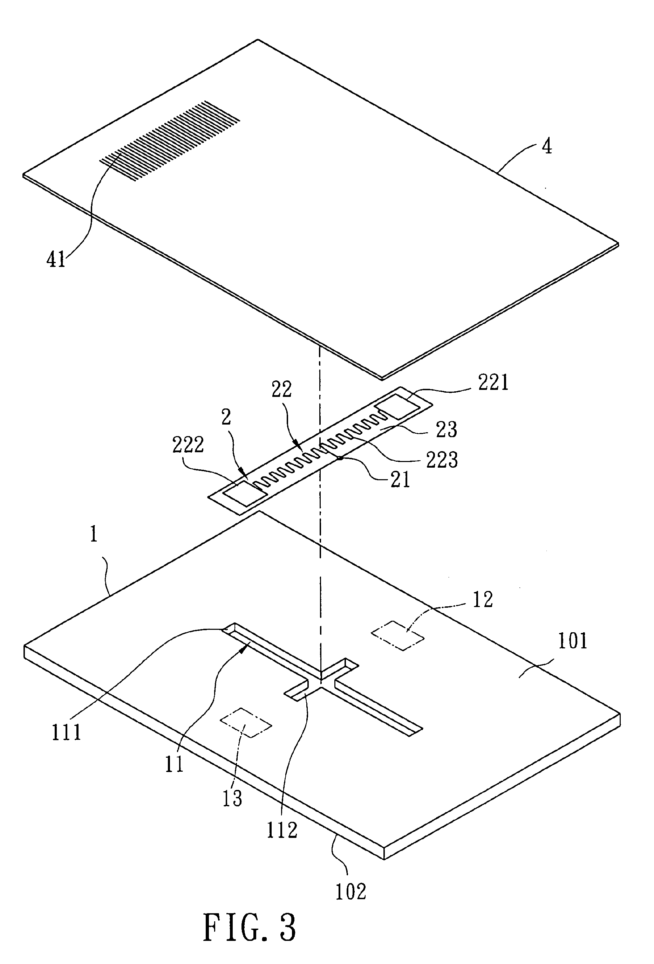

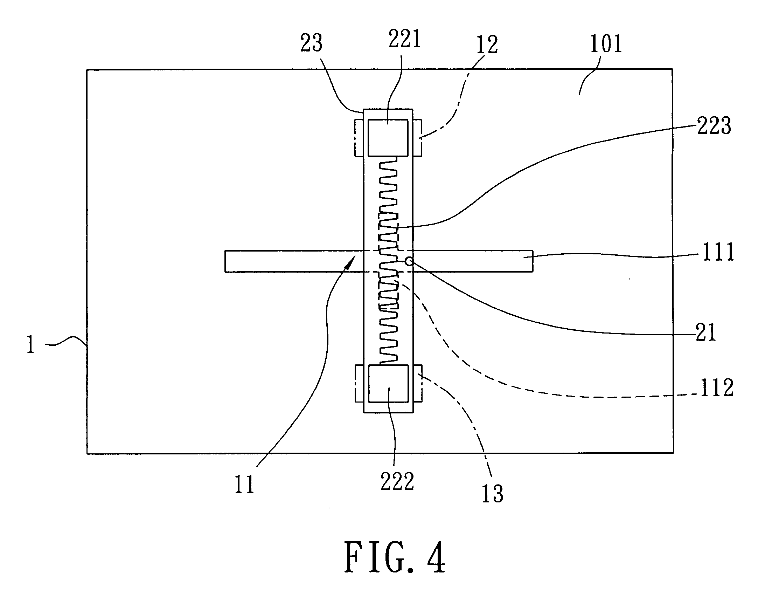

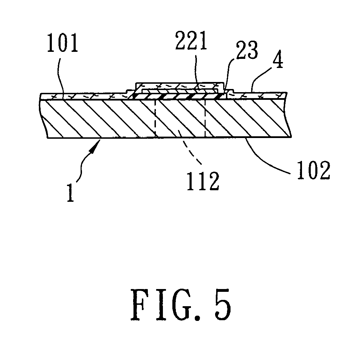

Figures 3 to 5 illustrate the second preferred embodiment of an RFID tag device according to this invention, which is a modification of the first preferred embodiment. Unlike the previous embodiment, the RFID tag device further includes a backing layer 23 disposed adhesively between the inlay tag 2 and the first surface 101 of the metal substrate 1 for attaching the inlay tag 2 to the metal substrate 1. In this embodiment, the tag chip 2 has an impedance matching that of the antenna 22.

It is noted that the RFID tag device of this invention can be installed to metallic and non-metallic products. Regardless of whether the RFID tag device of this invention is installed to a metallic product or a non-metallic product, one of the first and second surfaces 101, 102 of the metal substrate 1 is adapted to face a tag reader (not shown) during use, and an effective communication distance between the RFID tag device of this invention and the tag reader can be increased up to 1.68 meters for a transmission frequency of about 2.45 GHz. Furthermore, due to the presence of the metal substrate 1, the RFID tag device of this invention has an adequate strength to protect the inlay tag 2.

## Claims

1. A radio frequency identification tag device
**characterized by**:
a metal substrate (1) having opposite first and second surfaces (101, 102), and a slot (11) that extends from said first surface (101) to said second surface (102) ; and
an inlay tag (2) attached to said first surface (101) of said metal substrate (1) and disposed to span at least a part of said slot (11).

2. The radio frequency identification tag device as claimed in Claim 1, further **characterized by** a label sheet (4) that is made from a non-metallic material and that covers said first surface (101) of said metal substrate (1) and said inlay tag, said label sheet (4) being formed with visible product information.

3. The radio frequency identification tag device as claimed in Claim 2, further **characterized in that** said visible product information is in the form of a bar code (41).

4. The radio frequency identification tag device as claimed in Claim 2, further **characterized in that** said non-metallic material is paper.

5. The radio frequency identification tag device as claimed in Claim 1, **characterized in that**:
said first surface (101) of said metal substrate (1) has opposite first and second mounting areas (12, 13) that are disposed spacedly adjacent to a periphery of said slot (11); and
said inlay tag (2) includes
an antenna (22) having opposite first and second end portions (221, 222) attached respectively to said first and second mounting areas (12, 13) of said first surface (101) of said metal substrate (1), and an intermediate portion (223) interconnecting said first and second end portions (221, 222) and disposed to span said at least a part of said slot (11) in said metal substrate (1), and
a tag chip (21) connected electrically to said antenna (22).

6. The radio frequency identification tag device as claimed in Claim 5, further **characterized in that**:
said slot (11) in said metal substrate (1) has an elongate first slot portion (111), and an elongate second slot portion (112) intersecting perpendicularly said first slot portion (111) and having a length shorter than that of said first slot portion (111);
said first and second mounting areas (12, 13) of said first surface (101) of said metal substrate (1) are disposed respectively adjacent to opposite ends of said second slot portion (112) of said slot (11); and
said intermediate portion (223) of said antenna (22) is disposed to span said second slot portion (112) of said slot (11).

7. The radio frequency identification tag device as claimed in Claim 5, further **characterized in that** said tag chip (21) is connected electrically to said intermediate portion (223) of said antenna (22).

8. The radio frequency identification tag device as claimed in Claim 1, further **characterized by** a backing layer (23) disposed adhesively between said inlay tag (2) and said first surface (101) of said metal substrate (1) for attaching said inlay tag (2) to said metal substrate (1).
